# EUROPÄISCHE PATENTSCHRIFT

(11) **EP 1 100 758 B1**
(45) Veröffentlichungstag und Bekanntmachung des Hinweises auf die Patenterteilung: **10.12.2003**
(21) Anmeldenummer: 98933838.9
(22) Anmeldetag: 29.07.1998
(51) Int. Cl.: C04B 24/40

(54) **VERFAHREN ZUM HERSTELLEN VON CHROMATFREIEN ANORGANISCHEN BINDEMITTELN**
METHOD FOR PREPARING CHROMATE-FREE INORGANIC BINDING AGENTS
PROCEDE POUR PREPARER DES LIANTS INORGANIQUES EXEMPTS DE CHROMATE

(43) Veröffentlichungstag der Anmeldung: 23.05.2001
(73) Patentinhaber: HOLDERBANK FINANCIERE GLARUS AG, CH-8750 Glarus (CH)
(72) Erfinder: AKSTINAT, Manfred, CH-8050 Zürich (CH); SUTER, Willi, CH-5233 Stilli (CH)
(74) Vertreter: Haffner, Thomas M., Dr.
(86) Internationale Anmeldenummer: IB9801159
(87) Internationale Veröffentlichungsnummer: WO00006517

(56) Entgegenhaltungen:
- EP-A- 0 630 869
- EP-A- 0 697 380
- DD-A- 246 983
- US-A- 5 562 588

## Beschreibung

Die Erfindung bezieht sich auf ein Verfahren zum Herstellen von chromatfreien anorganischen Bindemitteln oder anorganischen Bindemitteln mit verringertem Cr(VI)-Gehalt.

Es ist bereits seit langem bekannt, daß die Ausgangsprodukte für die Zementherstellung einen mehr oder minder hohen Chromgehalt aufweisen können. Insbesondere das Vorliegen von wasserlöslichem sechswertigem Chrom im Zementmehl kann in der Folge von längerem Hautkontakt zu Hautausschlägen führen und ist aus diesem Grunde unerwünscht. Seit langem werden daher Verfahren und Maßnahmen vorgeschlagen, um den unerwünschten löslichen Chrom(VI)-Gehalt zu reduzieren und in der reduzierten Stufe zu fixieren. Zu diesem Zweck ist es insbesondere bekanntgeworden, Eisen(II)-Sulfat einzusetzen, wobei der wasserlösliche Chromatanteil in Zementen durch Eisen(II)-Sulfat zu dreiwertigem Chrom reduziert werden soll. Gleichzeitig sollten Eisen(II)-Ionen zu Eisen(III)-Ionen oxidiert werden.

Die Oxidation des hygroskopischen kristallinen Eisen(II)-Sulfates zur Eisen(III)-Verbindung erfolgt unter Zersetzung aber auch bereits schon unter Luft- bzw. Sauerstoffzutritt. Man spricht hier von Autoxidation. Beimengungen von bekannten Eisen(II)-Verbindungen zum trockenen Zementmehl können somit ihre reduzierende Wirkung häufig schon nach relativ kurzer Zeit verlieren, da sie bereits unter Luftzutritt zu unwirksamen Eisen(III)-Verbindungen oxidiert werden können. In der EP-B1 54 314 wurde in diesem Zusammenhang ein Zusatz von festem, trockenem, jedoch hygroskopischem Eisen(II)-Sulfat in Mengen von 0,3 bis 1 Gew.% zum Zement vorgeschlagen, wobei alternativ auch gelöstes Eisen(II)-Sulfat dem Zement zugesetzt wurde.

Zur Beseitigung des Chromat-Ions wurde ebenfalls neben einer Reduktion alternativ auch die Ausfällung mittels Bleisalzen, Bariumsalzen und auch Gips vorgeschlagen, um auf diese Weise den löslichen Chromat-Gehalt zu senken.

In der GB 22 80 901 wurde die Reduktion von Chrom(VI) in Abfallmaterialien über ein zweistufiges Verfahren vorgeschlagen, bei welchem in alkalischer Lösung wasserlösliche Eisen(II)-Sulfate eingesetzt werden und sich in der Folge mit Phosphaten eine stabile Mineralphase bilden soll.

Der WO 84/01942 ist zu entnehmen, daß Eisen(II)-Sulfathydrate bei relativ niedriger Temperatur vorgetrocknet werden müssen, um ein unerwünschtes Zusammenbacken und Klumpenbildung zu vermeiden. Aus der WO 84/02900 wiederum ist die Verwendung von Grünsalz und Gips zu entnehmen. In der WO 96/33133 wird vorgeschlagen, Grünsalz mit CaO auf einen pH-Wert zwischen 1,5 und 5 einzustellen, wobei hier als CaO-haltige Materialien auch Zemente vorgeschlagen werden. Die beschriebenen Grünsalze stehen in ausreichender Menge aus der Titandioxid-Produktion zur Verfügung.

Schließlich wird in der WO 91/15435 bereits vorgeschlagen, kristallines Mangan(II)-Sulfat als Reduktionsmittel einzusetzen.

Allen bekannten Vorschlägen ist gemeinsam, daß die verwendeten Metallsalze relativ leicht autoxidieren, d.h., daß sie bei Luftzutritt nach mehr oder minder kurzer Zeit ihre reduzierende Wirkung verlieren. Somit haben derartige Trockengemische von Metallsalzen mit Zementen nur eine beschränkte Lagerdauer in Bezug auf ihre chromatreduzierenden Eigenschaften.

Im Zuge der Beimischung zu Zementen neigen diese meist hygroskopischen Salze zusätzlich noch zu unerwünschter Klumpenbildung und Verfärbung im Zement.

Die vorliegende Erfindung zielt nun darauf ab, ein Verfahren der eingangs genannten Art zu schaffen, wodurch alle vorhergenannten Nachteile - ohne zusätzliche aufwendige Schritte und insbesondere ohne Fällungsreaktionen - vermieden werden und eine Reduktion des Chrom(VI) zu Chrom(III) unmittelbar stöchiometrisch und selektiv ermöglicht wird. Zur Lösung dieser Aufgabe besteht das erfindungsgemäße Verfahren im wesentlichen darin, daß den anorganischen Bindemitteln metallorganische Verbindungen bzw. organo-metallische Komplexe mit reduzierenden Eigenschaften zugegeben werden. Dadurch, daß metallorganische Verbindungen bzw. organo-metallische Komplexe mit reduzierenden Eigenschaften zugegeben werden, werden sowohl die selektive Komplexbildungstendenz als auch die Redox-Stabilitätskonstanten der jeweiligen Metall-Komplexe genützt.

Bevorzugt wird das erfindungsgemäße Verfahren so durchgeführt, daß als anorganische Bindemittel Zemente, Puzzolane, Schlacken, Aschen und CaSO₄-Modifikationen sowie deren Abmischungen untereinander verwendet werden.

Bevorzugte Komplexbildner im Rahmen des erfindungsgemäßen Verfahrens sind Polyhydroxyicarbonsäuren und/oder niedere Carbonsäuren, welche sich durch besonders günstige selektive Komplexbildungstendenz und günstige Redox-Stabilitätskonstanten auszeichnen.

Reduzierende Eigenschaften werden dann sichergestellt, wenn, wie es einer bevorzugten Weiterbildung der Erfindung entspricht, als Zentralatome im organischen Metall-Komplex Metalle der IV.-VIII. Nebengruppe des Periodischen Systems der Elemente, insbesondere Fe(II) und/oder Mn(II), eingesetzt werden, welche Cr(VI) reduzieren können.

Durch die Verwendung organometallischer Verbindungen oder Komplexe von Mangan(II) und/oder Eisen(II), z.B. von Komplexen der Polyhydroxicarbonsäuren in einem C₂- bis C₈-Gerüst, wird die Reduktion von Chrom(VI)-Verbindungen dadurch wesentlich beschleunigt, daß die bei der Umsetzung auftretenden Zwischenstufen die Redox-Reaktion begünstigen und die entstehenden Komplexe höherer Oxidationsstufe wesentlich stabiler sind als jene der ursprünglich eingesetzten Eisen(II)- bzw. Mangan(II)-Komplexe. Die bevorzugt höhere Stabilität der jeweiligen organischen Eisen(III)- bzw. Mangan(IV)-Komplexe gegenüber den Eisen(II)- bzw. Mangan(II)-Komplexen führt thermodynamisch zu einer spontanen Reduktion des Chrom(VI) zu Chrom(III).

Der jeweilige metallorganische Ausgangskomplex, insbesondere Gluconsäure-Komplex ist gegenüber Sauerstoff thermodynamisch deutlich beständiger als z.B. konventionelle Eisen(II)-Sulfathydrate. Darüber hinaus zeichnen sich die organometallischen Komplexe bzw. metallorganischen Verbindungen, insbesondere die der Polyhydroxicarbonsäuren, durch produktneutrale Farben aus, wohingegen die Reaktionsprodukte des Eisen(II)-Sulfates eine deutlich färbende Wirkung haben können. Das bei der Umsetzung gebildete Eisen(III)-Sulfat bewirkt, z.B. bei höheren Zusatzmengen, eine schmutzig-braune Verfärbung der Endprodukte.

Die Chromat-Reduktion, welche durch die Bildung und die Stabilität der neu entstehenden Komplexe der Eisen(III)- bzw. Mangan(IV)-Verbindungen initiiert und deutlich begünstigt wird, führt zusätzlich zu einer weiteren spontanen, selektiven und quantitativen Umsetzung zu stabilen Chrom(III)-Komplexen. Ein weiterer bedeutender technologischer Vorteil des Einsatzes von organischen Eisen(II)- bzw. Mangan(II)-Kompexen bzw. entsprechender organometallischer Komplexe mit Polyhydroxicarbonsäuren und/oder niederen Carbonsäuren gegenüber Fe(II)-Sulfaten besteht u.a. aber auch darin, daß die Neigung zur Autoxidation sehr gering ist, so daß eine verbesserte Langzeitwirkung (Lagerfähigkeit) derartiger organometallischer Verbindungen oder organometallischer Komplexe in Zement-Trockenmischungen gewährleistet wird.

Aufgrund der selektiven Komplexierungseigenschaften und der hohen Stabilität der Umsetzungsprodukte können die erfindungsgemäß metallorganischen Komplexe in vergleichsweise geringen, nahezu stöchiometrischen Mengen eingesetzt werden. Wie es einer bevorzugten Verfahrensweise entspricht, werden metallorganische Verbindungen und/oder organometallische Komplexe von Mn(II)-oder Fe(II) je nach Chrom(VI)-Gehalt und unter Berücksichtigung der jeweiligen Molekulargewichte in Mengen von 0,01 bis 2 Gew.% einem Zement zugegeben.

Darüber hinaus sind die hier vorgeschlagenen metallorganischen Verbindungen bzw. Organometall-Komplexe nicht hygroskopisch, so daß auch keine Klumpenbildung im Ausgangs- bzw. Endprodukt zu erwarten ist.

Metallorganische Komplexe von Polyhydroxicarbonsäuren und niederen Carbonsäuren werden großtechnisch als Viehfutterzusatz verwendet, sind kommerziell also verfügbar bekannt und können daher unbedenklich eingesetzt werden.

Eisen(II)- und/oder Mangan(II)-Komplexe können bevorzugt einem Zementklinker vor und während des Mahlprozesses zugesetzt werden. Die metallorganischen Verbindungen bzw. Organometall-Komplexe können in besonders einfacher weise in gelöster Form zugegeben werden.

Der Einsatz der erfindungsgemäßen metallorganischen Verbindungen bzw. Organometall-Komplexe kann bevorzugt auch in Gemischen mit herkömmlichen Mahlhilfsmitteln und/oder Zement bzw. Betonzusatzmitteln erfolgen.

## Patentansprüche

1. Verfahren zum Herstellen von chromatfreien anorganischen Bindemitteln oder von anorganischen Bindemitteln mit verringertem Cr(VI)-Gehalt, **dadurch gekennzeichnet, daß** den anorganischen Bindemitteln metallorganische Verbindungen bzw. organo-metallische Komplexe mit reduzierenden Eigenschaften zugegeben werden.

2. Verfahren nach Anspruch 1, **dadurch gekennzeichnet, daß** als anorganische Bindemittel Zemente, Puzzolane, Schlacken, Aschen und CaSO₄-Modifikationen sowie deren Abmischungen untereinander verwendet werden.

3. Verfahren nach Anspruch 1 oder 2, **dadurch gekennzeichnet, daß** als organische Komplexbildner Polyhydroxicarbonsäuren und/oder niedere Carbonsäuren eingesetzt werden.

4. Verfahren nach Anspruch 1, 2 oder 3, **dadurch gekennzeichnet, daß** als Zentralatome im organischen Metall-Komplex Metalle der IV. - VIII. Nebengruppe des Periodischen Systems der Elemente, insbesondere Fe(II) und/oder Mn(II), eingesetzt werden, welche Cr(VI) reduzieren können.

5. Verfahren nach einem der Ansprüche 1 bis 4, **dadurch gekennzeichnet, daß** die metallorganischen Verbindungen oder organometallischen Komplexe aus einem Mn(II)- oder Fe(II)-Zentralatom sowie Polyhydroxicarbonsäuren und/oder niederen Carbonsäuren mit einem C₂- bis C₈-Gerüst bestehen.

6. Verfahren nach einem der Ansprüche 1 bis 5, **dadurch gekennzeichnet, daß** insbesondere Gluconsäure-Komplexe des Fe(II) und/oder Mn(II) eingesetzt werden.

7. Verfahren nach einem der Ansprüche 1 bis 6, **dadurch gekennzeichnet, daß** metall-organische Verbindungen bzw. organometallische Komplexe in Mengen von 0,01 bis 2,00 Gew.% einem Zement zugemischt werden.

8. Verfahren nach einem der Ansprüche 1 bis 7, **dadurch gekennzeichnet, daß** Fe(II)- und/oder Mn(II)-Komplexe einem Zementklinker vor und/oder während des Mahlprozesses zugesetzt werden.

9. Verfahren nach einem der Ansprüche 1 bis 8, **dadurch gekennzeichnet, daß** die metall-organischen Verbindungen bzw. Organo-Metallkomplexe in gelöster Form zugegeben werden.

10. Verfahren nach einem der Ansprüche 1 bis 9, **dadurch gekennzeichnet, daß** die metall-organischen Verbindungen bzw. Organo-Metallkomplexe in Gemischen mit herkömmlichen Mahlhilfsmitteln und/oder Zement- bzw. Betonzusatzmitteln eingesetzt werden.

## Claims

1. Process for the preparation of chromate-free inorganic binders or of inorganic binders having a reduced Cr(VI) content, **characterised in that** metallo-organic compounds or organometallic complexes having reducing properties are added to the inorganic binders.

2. Process according to claim 1, **characterised in that** the inorganic binders used are cements, pozzuolana, clinkers, ashes and CaSO₄ modifications, as well as mixtures thereof.

3. Process according to claim 1 or 2, **characterised in that** the organic complexing agents used are polyhydroxycarboxylic acids and/or lower carboxylic acids.

4. Process according to claim 1, 2 or 3, **characterised in that** there are used as the central atoms in the organic metal complex metals of sub-groups TV to VIII of the periodic system of the elements, especially Fe(II) and/or Mn(II), which are able to reduce Cr(VI).

5. Process according to any one of claims 1 to 4, **characterised in that** the metallo-organic compounds or organometallic complexes consist of a Mn(II) or Fe(II) central atom as well as polyhydroxycarboxylic acids and/or lower carboxylic acids having a C₂ to C₈ framework.

6. Process according to any one of claims 1 to 5, **characterised in that** there are used especially gluconic acid complexes of Fe(II) and/or Mn(II).

7. Process according to any one of claims 1 to 6, **characterised in that** metallo-organic compounds or organometallic complexes are mixed in amounts of from 0.01 to 2.00 wt.% with a cement.

8. Process according to any one of claims 1 to 7, **characterised in that** Fe(II) and/or Mn(II) complexes are added to a cement clinker before and/or during the grinding process.

9. Process according to any one of claims 1 to 8, **characterised in that** the metallo-organic compounds or organometallic complexes are added in dissolved form.

10. Process according to any one of claims 1 to 9, **characterised in that** the metallo-organic compounds or organometallic complexes are used in the form of mixtures with conventional grinding aids and/or cement or concrete additives.

## Revendications

1. Procédé de préparation de liants inorganiques sans chromate ou de liants inorganiques ayant une teneur réduite en Cr(VI), **caractérisé en ce qu'**on ajoute aux liants inorganiques des composés organométalliques ou des complexes organométalliques ayant des propriétés réductrices.

2. Procédé selon la revendication 1, **caractérisé en ce qu'**on utilise en tant que liants inorganiques des ciments, des pouzzolanes, des scories, des cendres et des modifications du CaSO₄, ainsi que leurs mélanges les uns avec les autres.

3. Procédé selon la revendication 1 ou 2, **caractérisé en ce qu'**on utilise en tant que complexants organiques des acides polyhydroxycarboxyliques et/ou des acides carboxyliques inférieurs.

4. Procédé selon la revendication 1, 2 ou 3, **caractérisé en ce qu'**on utilise en tant qu'atomes centraux dans les complexes organométalliques des métaux du IVème au VIIIème groupes secondaires du Tableau Périodique des Eléments, en particulier Fe(II) et/ou Mn(II), qui peuvent réduire Cr(VI).

5. Procédé selon l'une des revendications 1 à 4, **caractérisé en ce que** les composés organométalliques ou les complexes organométalliques sont constitués d'un atome central de Mn(II) ou de Fe(II), ainsi, que d'acides polyhydroxycarboxyliques et/ou d'acides carboxyliques inférieurs ayant un squelette en C₂ à C₈.

6. Procédé selon l'une des revendications 1 à 5, **caractérisé en ce qu'**on utilise en particulier des complexes de l'acide gluconique du Fe(II) et/ou du Mn(II).

7. Procédé selon l'une des revendications 1 à 6, **caractérisé en ce qu'**on mélange des composés organométalliques ou des complexes organométalliques, en des quantités de 0,01 à 2,00 % en poids, à un ciment.

8. Procédé selon l'une des revendications 1 à 7, **caractérisé en ce que** les complexes de Fe(II) et/ou de Mn(II) sont ajoutés à un clinker de ciment avant et/ou pendant l'opération de broyage.

9. Procédé selon l'une des revendications 1 à 8, **caractérisé en ce que** les composés organométalliques ou les complexes organométalliques sont ajoutés sous forme dissoute.

10. Procédé selon l'une des revendications 1 à 9, **caractérisé en ce que** les composés organométalliques ou les complexes organométalliques sont utilisés sous forme de mélanges avec des auxiliaires de broyage traditionnels et/ou des adjuvants du ciment ou du béton.
